**Europäisches Patentamt**

**European Patent Office**

**Office européen des brevets**

(19)

(11) Publication number : **0 505 337 A1**

(12) **EUROPEAN PATENT APPLICATION**

(21) Application number : **92830135.7**

(22) Date of filing : **19.03.92**

(51) Int. Cl.⁵ : **B60Q 1/46, B60Q 1/38, B60Q 1/52**

PRIORITY 220391 IT MI9100781.

(30) Priority : **22.03.91**

(43) Date of publication of application :
**23.09.92 Bulletin 92/39**

(84) Designated Contracting States :
**DE ES FR GB PT**

(71) Applicant : **Codrino, Giuseppe**
**Via Stazione, 2**
**I-15028 Quattordio (Alessandria) (IT)**

(72) Inventor : **Codrino, Giuseppe**
**Via Stazione, 2**
**I-15028 Quattordio (Alessandria) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) **Flashing controlling device for motor vehicle lights.**

(57) A device for controlling the flashing of motor vehicle direction indicator lamps, emergency lamps, impact signalling lamps and the like, and for detecting possible failures of the lamps comprises an electronic circuit for processing a plurality of input signals provided for controlling the flashing of the direction lamps and for manually energizing the emergency lamps and processing, upon an impact of the motor vehicle, a signal for autonomously energizing the flashing of the emergency lamps.

FIG. 1

## BACKGROUND OF THE INVENTION

The present invention relates to a device for controlling the flashing of motor vehicle direction indicator lamps, emergency lamps, impact signalling lamps and the like.

As is known, motor vehicles are frequently subjected to the so-called "chain" telescopic impacts because of possible errors and/or lack of attention of the driver of motor vehicles running on a road.

For signalling to incoming motor vehicle drivers such a telescopic impact condition there are frequently used flashing signalling lamps.

These prior signalling lamps, however, must be manually operated by the drivers involved in a car accident,which flashing lamp energizing operation, on the other hand, is frequently omitted by the drivers for example because a lack of calmness of the like.

Accordingly, a mere availability of means for signalling possible dangerous conditions, though necessary, is not per se sufficient to prevent other deleterious impacts from occurring.

## SUMMARY OF THE INVENTION

Accordingly, the aim of the present invention is to overcome the above mentioned drawbacks by providing a device for controlling the flashing lamps of a motor vehicle which is specifically designed for automatically energizing the flashing emergency lamps of said motor vehicles in a case of a possible impact.

Within the scope of the above mentioned aim, a main object of the present invention is to provide a device for controlling the emergency flashing lamps of a motor vehicle which also comprises circuit means for detecting and signalling possible failed lamps.

Yet another object of the present invention is to provide such a device for controlling the emergency flashing lamps of a motor vehicle, which is very simple construction-wise and very advantageous from a merely economic standpoint, while providing a very reliable operation.

Yet another object of the present invention is to provide such a device which can be easily assembled in a motor vehicle electric system by a very reduced number of electrical connections.

According to one aspect of the present invention, the above mentioned aim and objects, as well as yet other objects, which will become more apparent hereinafter, are achieved by a device for controlling emergency flashing lamps of motor vehicles, characterized in that said device essentially comprises an electronic circuit for processing a plurality of input signals, so as to control the flashing of the direction lamps and allow a driver to manually energize the emergency lamps, as well as for processing, upon a possible impact of the motor vehicle, a signal for timely and automatically energizing to a flashing condition said emergency lamps.

## BRIEF DESCRIPTION OF THE DRAWINGS

Further characteristics and advantages of the control device according to the present invention will become more apparent hereinafter from the following detailed disclosure of a preferred, though not exclusive embodiment thereof, which is illustrated, by way of an indicative but not limitative example, in the figures of the accompanying drawings, where:

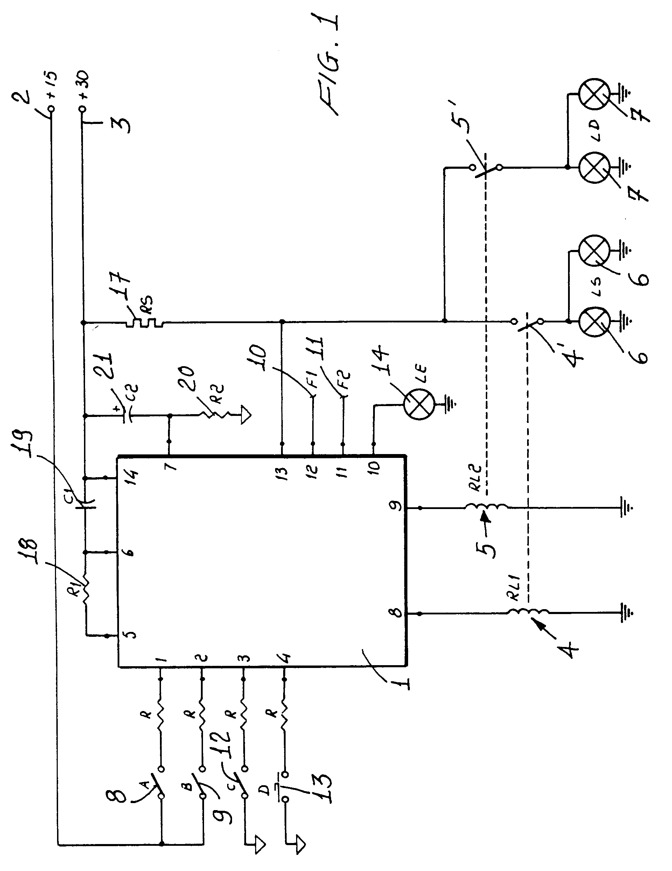

Figure 1 is a schematic view illustrating a functional electric diagram of the control device according to the invention; and

Figures 2 and 3 show possible assembling diagrams of an integrated flashing module which forms a main portion of the circuit of Figure 1, with reference to the outer interconnections of the module itself.

## DESCRIPTION OF THE PREFERRED EMBODIMENT

With reference to the Figures of the accompanying drawings, the device for controlling flashing lamps of a motor vehicle according to the present invention comprises a solid state electronic circuit 1, which is constantly power supplied at its inputs 2 and 3 and having, in a rest conidition, a very low power drain (that is as the direction and emergency lamps are in a disenergized condition).

This circuit, which includes an integrated flashing module 1', comprises relays 4 and 5 the contacts 4' and 5' of which are in a normally open condition in order to alternatively power supply corresponding left 6 and right 7 lamp sets.

This circuit, in particular, is energized by means of a series of commands which practically correspond to a plurality of signal contacts, as conventionally provided by electromechanical elements, but which can also be actuated by means of other operatively equivalent devices, for example of an electronic or an optical type.

More specifically, the commands or driver elements 8 and 9 which, usually, are actuated by the direction control lever arranged near the steering wheel and which are disenergized by means of a mechanical system provided for causing the mentioned lever to return to its rest position, also control the timing of the direction lamps.

In this connection it should be pointed out that a main feature of the above mentioned circuit is that it is specifically designed for receiving at the inputs thereof contacts which are not stable, but temporary, for energizing the several provided functions.

Moreover, that same circuit is also provided with two further inputs 10 and 11 for disactuating or disenergizing the above mentioned functions.

The driver element or command 12, in turn, allows a simultaneous flashing of the right and left direction lamps, so as to provide an emergency flashing function.

A further driver element or command 13 is moreover provided, which is specifically designed for driving the above mentioned emergency flashing as the motor vehicle is involved in an accident, which is practically detected by an impact sensor of any known type.

In particular, the contact provided by this command or control can be temporary so as to provide a short duration pulse, it being also possible to provide a mechanical type of restraining means for said contact.

In the first case, in order to disenergize the flashing, it is necessary to enable or insert the manual emergency lamp by means of the push button 12 and then release this push button so as to switch off the flashing.

In the second case, the impact sensor will be provided with mechanical restraining means of the resettable type, thereby the disenergizing of the flashing will be performed automatically with the re-enabling of said sensor.

In both cases, anyhow, the flashing can be disactuated exclusively after a comparatively long time period (for example ten minutes).

The circuit further comprises an output which can be used for a signalling purpose, by means of a signalling lamp 14 as conventionally arranged on the dashboard and adapted to signal the emergency functions.

The signal available at this output, in particular, will be synchronous with that of the mentioned relays and, obviously, it will be present only as an emergency function is active.

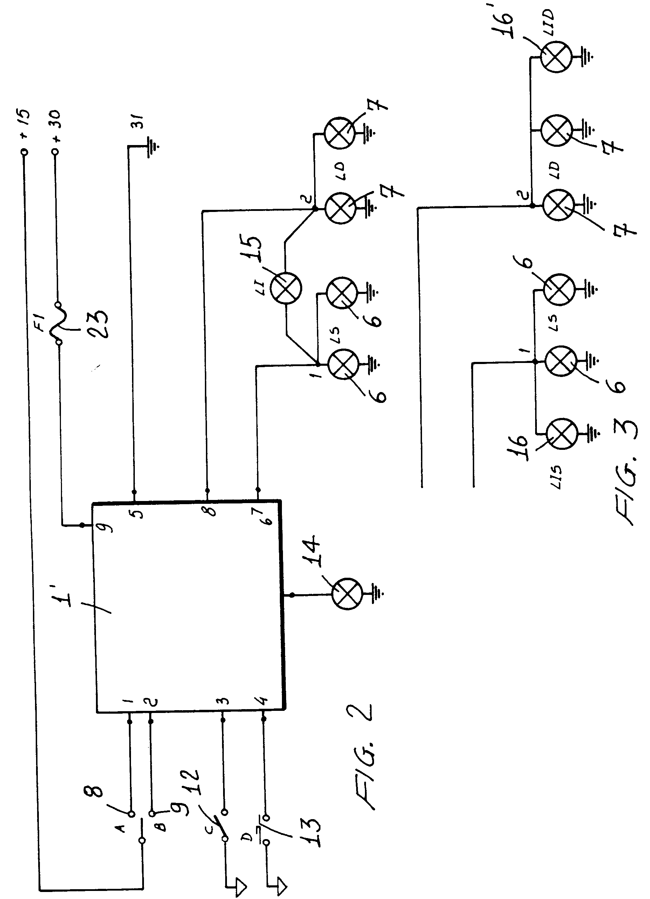

In this connection it should be moreover pointed out that for signalling the condition of the right or left flashing lamp, a single signalling lamp 15 can be provided, as shown in Figure 2, or it is possible to provide two signalling lamps 16 and 16′, as is shown in Figure 3.

The circuit further comprises a shunt resistor 17, having a very low resistance value, in order to detect the interruption of the filament of one or more of the above mentioned direction lamps 6 and 7.

In a failure case, the circuit will detect a less voltage drop at the ends of said resistor and, accordingly, the logic of the circuit will drive the flashing of the lamps with a frequency which will be nearly double with respect to the usual flashing frequency.

The resistor 18 and the capacitor 19 are provided for generating the inside timing for the circuit, whereas the elements 20 and 21 are provided to protect said circuit against electric noise and noisy signals.

Further resistors 22 are moreover provided, which are series connected to the inputs 8,9,12 and 13 for protecting these inputs, and a protection fuse 23 is also provided.

From the above disclosure and the Figures of the accompanying drawings it should be apparent that the invention fully achieves the intended aim and objects.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A device for controlling emergency flashing lamps of motor vehicles, characterized in that said device essentially comprises an electronic circuit for processing a plurality of input signals, so as to control the flashing of the direction lamps and allow a driver to manually energize the emergency lamps, as well as for processing, upon a possible impact of the motor vehicle, a signal for timely and automatically energizing to a flashing condition said emergency lamps.

2. A device according to Claim 1, characterized in that said device comprises a solid state electronic circuit which is constantly power supplied and having a very low rest condition consume, said circuit, which includes an integrated flashing module, comprising a plurality of relays having normally open contacts in order to alternatively power supply corresponding left and right lamp sets.

3. A device according to Claim 2, characterized in that said circuit is actuated by means of a plurality of commands, defining signal contacts, and conventionally formed by electromechanic elements, but which can also be actuated by means of other devices, functionally equivalent, for example of an electronic or optical type.

4. A device according to Claim 2, characterized in that said circuit has inputs thereof for receiving not stable temporary contacts in order to energize the several functions, said circuit being moreover provided with two dedicated inputs for disabling said functions.

5. A device according to Claim 1, characterized in that said device further comprises a command for autonomously actuating the emergency flashing, as the motor vehicle is involved in an accident, which is detected by an impact sensor of conventional type, the contact actuated by said command being a temporary contact so as to provide a short duration pulse, or provide a mechanical restraining of said contact.

6. A device according to Claim 1, characterized in thai said device comprises means for disactuating the emergency flashing exclusively after a comparatively long time period.

7. A device according to Claim 2, characterized in that said circuit comprises a signalling output for signalling, through a signalling lamp arranged on a dashboard of the motor vehicle, the emergency functions, the signal available at said output being synchronous with that of said relays and being present exclusively as an emergency function is actuated.

8. A device according to Claim 1, characterized in that said device comprises, for signalling the actuation of the right or left flashing lamp a single signalling lamp or a pair of signalling lamps.

9. A device according to Claim 2, characterized in that said circuit comprises a very low resistance value shunt resistor for detecting the interruption of the filament of one or more of said direction lamps.

10. A device according to Claim 1, characterized in that said device further comprises a resistor and a capacitor for generating the inner timing of said circuit, and further components for protecting said circuit against electrical noise, there being moreover provided further resistors series connected to said inputs for protecting said inputs and there being moreover provided a protection fuse.

FIG. 1

FIG. 2

FIG. 3

EP 0 505 337 A1

| European Patent Office | **EUROPEAN SEARCH REPORT** | Application Number |
|---|---|---|

EP 92 83 0135

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 107 919 (HÖLZLWIMMER) <br> * abstract; figure 3 * <br> --- | 1-8 | B60Q1/46 <br> B60Q1/38 <br> B60Q1/52 |
| Y <br> A | DE-A-3 021 997 (FRICKEL) <br> * the whole document * <br> --- | 1 <br> 3,5,7,8, 10 | |
| Y | US-A-4 357 594 (EHRLICH) <br> * abstract; figures 7,11 * <br> --- | 1 | |
| A | EP-A-0 408 821 (CAVIS CAVETTI ISOLATI SPA) <br> * abstract; figure 3 * <br> --- | 1 | |
| A | EP-A-0 276 473 (FIAT AUTO SPA) <br> * abstract; figure 1 * <br> ----- | 1,9 | |
| | | | **TECHNICAL FIELDS SEARCHED (Int. Cl.5)** <br><br> B60Q |

The present search report has been drawn up for all claims

| Place of search | Date of completion of the search | Examiner |
|---|---|---|
| THE HAGUE | 14 JULY 1992 | Onillon C.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)

7